# EUROPEAN PATENT APPLICATION

(11) **EP 4 450 838 A1**
(43) Date of publication of application: **23.10.2024**
(21) Application number: 22906473.8
(22) Date of filing: 12.12.2022
(51) Int. Cl.: F16C 11/04, F16C 11/10

(54) **ROTATIONAL LOCKING DEVICE OR MECHANISM**

(30) Priority: 14.12.2021 CN 202111527498
(71) Applicant: Shanghai Smelting Succeeder International Trade Co., Ltd., Shanghai 201500 (CN)
(72) Inventor: LI, Jianfeng, Shanghai 201500 (CN)
(74) Representative: Patent 42
(86) International application number: PCT/CN2022/138286
(87) International publication number: WO 2023/109727

(57) **Abstract**

The present disclosure relates to a rotary locking device or mechanism that realizes the locking function within connected end portions of two connected rotatable bodies. By axial movement of movable locking shafts, the function of rotating and locking the two connected rotatable bodies at a specified angle range is realized; by setting the shape of non-regular circular cross-sections of the movable locking shafts and locking shaft holes, the function of locking and unlocking the two connected rotatable bodies at different locking angles is realized; and by changing angular positions of rotation axes of two connected ends, degrees of freedom are adjusted or set. The rotary locking device or mechanism of the present disclosure can be applied in different fields, such as industry, transportation, engineering and construction, medical, aerospace, artificial intelligence, and life.

## Description

### Technical Field

The present disclosure relates to the technical field of locking, and in particular to a rotary locking device or mechanism.

### Background

In the common rotary locking device or mechanism of the prior art, two connected rotatable bodies are typically connected via a round shaft, and then are locked or unlocked using the principle of triangular fixation (such as a movable support rod) or by a locking device or mechanism, such as an automatic door, a hidden bed, and a rotary support rod, which are exposed outside a product, not only affecting the overall aesthetics of the product to a large extent, but also occupying external space, and even impeding the normal use of the product, so the common rotary locking device or mechanism is difficult to popularize in life. In addition, products involving rotary locking mechanisms, such as backrests of automated seats, robotic arms, robotic grippers, medical instruments, industrial robots, and joints of humanoid robots, are prevalent in the fields including industry, transportation, medical, aerospace, and artificial intelligence. In the prior art, rotation is usually realized by means of pinion and rack drive, worm gear drive, belt drive or chain drive, and other locking devices are used to realize locking. Due to complex structure, high manufacturing cost, large size and other disadvantages, the rotary locking mechanism is limited in scope of application, especially in some products or mountings with special limited in shape and appearance, such as surgical robotic hands, humanoid robot fingers, and small-sized robotic worms.

### Summary

### Technical problems

An objective of the present disclosure is to overcome the deficiencies of the prior art and to fill the gaps in the prior art, and the technical problems solved are as follows. By the axial movement of movable locking shafts in end portions of two connected rotatable bodies, the two connected rotatable bodies are locked and located and unlocked in a set locking angular position, making up for the deficiency that after being rotatably connected via a round shaft, the two conventional rotatable bodies are locked and located and unlocked via other complex locking devices or mechanisms.

### Technical solutions for problems

### Technical solutions

"Head portions of movable locking shafts" in the present disclosure all refer to axial end portions of the movable locking shafts in a locking direction. The parts where the movable locking shaft, rotatable body and other mountings of the present disclosure are in contact with each other are all made of metallic or non-metallic materials with rigidity, so as to ensure the normal operation of a rotary locking device or mechanism. The overall shape of the rotatable body described in the present disclosure is not limited, for example, it can be block, strip, sheet, and post, or depending on the shape of a product or mounting.

A rotary locking device or mechanism of the present disclosure includes at least two rotatable bodies, movable locking shafts, and drive devices or mechanisms. The drive devices or mechanisms include rotary drive devices or mechanisms, and axial drive devices or mechanisms; intercommunicated locking shaft holes containing non-regular circular cross-sectional segments are disposed at the rotatable bodies and two connected end portions therebetween in a penetrating manner, and movable locking shafts containing non-regular circular cross-sectional segments are arranged in the locking shaft holes in a penetrating manner. The two connected end portions are locked when the movable locking shafts move axially under the action of the axial drive devices or mechanisms to locking positions where the movable locking shafts are embedded and locked simultaneously with walls of the locking shaft holes in the two connected end portions. The two connected end portions are unlocked when the movable locking shafts axially move under the action of the axial drive drives or mechanisms to unlocking positions where at least one of the connected end portions may be rotated relatively to the movable locking shafts within a defined angular range by means of the rotary drive devices or mechanisms. In some examples, the non-regular circular cross-sectional segment is a cylindrical or circular table segment with a rough surface. In some preferred examples, a non-regular circular cross-section is an axisymmetric figure having three or more symmetric axes, such as a regular polygon, a concave polygon, a toothed shape, or a valvular shape having three or more symmetric axes.

Preferably, the two connected end portions are separately a connecting shaft end portion and a movable end portion disposed with a through groove; the locking shaft holes are vertically disposed on a side face of the through groove in a penetrating manner; the two connected end portions are connected in an insertion manner via the movable locking shafts; and the connecting shaft end portion is connected to the movable locking shafts as a whole in a manner of non-relative rotation.

In some embodiments, the rotatable bodies are connected in series, or a connected end portion on a parallel rotatable body is connected to a single rotatable body, or a rotatable body in series. In some examples, on the rotary locking mechanism, the degree of freedom is adjusted by changing an angular position of a rotation axis of the connected end portion. In some such examples, rotation axes of two adjacent connected end portions are perpendicular to each other, enabling two rotatable bodies spaced apart to rotate in two orthogonal directions relative to a rotatable body therebetween.

Preferably, the movable locking shaft and the locking shaft hole are in step shape, and each non-regular circular stepped segment has a taper for insertion fitting, and a cross-section thereof is an axisymmetric figure with three or more symmetric axes. In two adjacent stepped segments, a maximum non-regular circular cross-sectional area of a stepped segment close to a locking direction of the movable locking shaft is less than or equal to a minimum non-regular circular cross-sectional area of the other stepped segment.

Preferably, the axial drive devices or mechanisms include elastic members, the elastic members are arranged directly or indirectly between the movable locking shaft and the rotatable body and keeps exerting pressure on the movable locking shaft in a locking direction. In some examples, the elastic member is a limit spring, intercommunicated limit pin holes are simultaneously disposed on the connecting shaft end portion and the movable locking shafts in a penetrating manner, the limit pins are arranged in the limit pin holes in a penetrating manner, and are axially fixed to limit pin holes of connecting shaft end portion; and in a locking state, a distance between a side of the limit pin facing a locking direction of a side wall of the limit pin hole of movable locking shafts and an opposite side wall of the limit pin hole of movable locking shafts is greater than or equal to a movable effective distance of the movable locking shaft moving axially from the unlocking position to the locking position. Limit spring holes are disposed on side walls of the limit pin holes of movable locking shafts in the locking direction of the movable locking shaft in a penetrating manner; and the limit spring is arranged in the limit spring hole, with one end pressing against a bottom wall of the limit spring hole and the other end pressing directly or indirectly against the limit pin.

Preferably, the drive devices or mechanisms include rotary drive bodies or rotary drive shafts, the rotary drive bodies or the rotary drive shafts being arranged in relative rotation to one of the two connected end portions. In some examples, a mode for driving the drive device or mechanism is motor drive, pneumatic drive, hydraulic drive, worm gear drive, pinion and rack drive, belt drive, rope drive, or redundancy drive or hybrid drive including two or more of the above modes. In some examples, rotary drive body through-holes are disposed at two ends of the movable locking shaft, the rotary drive bodes or rotary drive shafts are arranged in the rotary drive body through-holes and axially fixed to the movable end portion. The limit spring is arranged in the rotary drive body through-hole, with one end pressing against the movable locking shaft and the other end pressing against the rotary drive body or the rotary drive shaft.

In some embodiments, drive holes coaxial with and intercommunicated with the locking shaft holes of movable end portion are disposed on sides of the movable end portion in the locking direction of the movable locking shaft. Two symmetrically driven lug bosses are radially arranged on a hole wall of the drive hole, and an intersection line of planes where two circumferential sides of each of the driven lug bosses are located is colinear with a rotation axis, with an angle between the two sides being set to be B degrees. Two driving lug bosses, which are mutually pressed against with the driven lug bosses during rotation, are radially arranged on the rotary drive shaft, and an intersection line of planes where two circumferential sides of each of the driving lug bosses are located is colinear with a rotation axis, with an angle between the two sides being set to be A degrees (A + B ≤ 180). When the movable locking shaft is in the unlocking position, the driving lug bosses drive the driven lug bosses to rotate, i.e., the movable end portion and the connecting shaft end portion start rotating relative to each other.

In some such examples, A + B < 180, the rotary drive devices or mechanisms are bi-directional rotary drives or mechanisms, flanges are radially arranged at the rotary drive shafts, and limit springs are arranged between sides of the flanges facing the locking direction of the movable locking shaft and the movable locking shafts. The limit springs always push the movable locking shafts in the locking direction of the movable locking shaft. N (N being a positive integer, and N≥2) circumferentially equally spaced rotary-pressing lug bosses are arranged on opposite sides of the flanges, an interval radian between each adjacent rotary-pressing lug bosses and a radian between the two circumferential sides of the rotary-pressing lug boss are C degrees (C = 180 ÷ N), an intersection line of planes where each two sides are located is collinear with a rotation axis of the movable end portion, and two sides of each of the rotary-pressing lug bosses are made into rotary-pressing slopes with radians. N pressurized grooves, which are fitted with the rotary-pressing lug bosses when the movable locking shaft is in the locking position, are disposed on flanges radially arranged on end faces of head portions of the movable locking shafts or inner walls of the rotary drive body through-holes. When the rotary drive shaft rotates by 180-(A+B) degrees at the locking position, i.e., the initial position in which the rotary-pressing lug boss fits with the pressurized groove, the rotary-pressing slope rotatably presses a pressurized slope until the movable locking shaft moves to the unlocking position, at which point, an end face of the rotary-pressing lug boss mutually presses against with an upper part of the pressurized slope of the pressurized groove, and a circumferential side face of the driving lug boss abuts against a circumferential side face of the driven lug boss. When the driving lug boss drives the pressurized lug boss to rotate by (A+B+C)-180 degrees continuously, the two connected end portions rotate relative to each other to locking positions, and at this time, the N rotary-pressing lug bosses slide into the pressurized grooves simultaneously and fitted with each other, that is, the movable locking shafts move to the locking positions under the pressure of the limit springs. Similarly, when the driving lug boss drives the pressurized lug boss to rotate reversely by 180-(A+B) degrees, the movable locking shafts move to the unlocking positions, and when the pressurized lug boss continues to rotate by (A+B+C)-180 degrees, the two connected end portions rotate relative to each other to the initial position. The cross sectional segment of the movable locking shaft is set as an axisymmetric convex polygon with three or more symmetric axes, the number of sides of which is X (X≥4). When D ≥ 360 ÷ X, stop lug bosses are arranged radially on side walls of the movable locking shafts, and stop lug boss grooves cooperating with the movement of the stop lug bosses are disposed on walls of the locking shaft holes at the locking angular position. During the relative rotation of the pressurized lug boss relative to the movable locking shaft driven by the driving lug boss, the stop lug boss presses against an axial side wall of the stepped segment of the locking shaft hole of movable end portion under the pressure of the limit spring until the movable end portion slides into the stop lug boss groove when rotating to the set locking angular position, i.e., the movable locking shafts move to the locking positions, so that the movable locking shafts and the movable end portion smoothly bypass the unwanted locking angular positions in the course of relative rotation.

In some examples, the driving lug bosses are arranged on side faces of end portions of rotary-pressing drive shafts, and the pressurized grooves are disposed on the end faces of the head portions of the movable locking shafts or on mountings rotatably connected to the movable locking shafts.

In some such examples, the drive devices or mechanisms simultaneously drive a plurality of parallel rotatable bodies containing movable end portion on the same rotation axis, and movable locking shaft end portions on the same rotation axis are connected to each other by means of connecting rods; and when the connecting rods move from the locking positions to the unlocking positions of the movable locking shafts, each of the movable locking shafts simultaneously moves from the locking position to the unlocking position driven by the connecting rod.

In some examples, the axial drive devices or mechanisms are rotary-pressing devices or mechanisms including rotary-pressing drive bodies containing rotary-pressing rotating shafts, rotary-pressing device holes intercommunicated with the locking shafts of connecting shaft end portion are disposed at bottoms of the through-holes of the movable end portion in a direction of the connecting shaft end portion, and the rotary-pressing drive bodies are arranged in the rotary-pressing device holes. The rotary-pressing rotating shafts are round shafts, with semi-arc rotary-pressing lug bosses whose end portions are of equal diameter to the round shafts arranged radially in axial cross-sections at end portions of the round shafts. Rotary-pressing lug boss holes movably cooperated with the rotary-pressing lug bosses are disposed on side walls of the movable locking shafts in a penetrating manner, the rotary-pressing lug bosses are arranged in the rotary-pressing lug bosses in a penetrating manner, and the movable locking shafts move to the locking position or the unlocking positions by rotatably pressing axial side walls of the rotary-pressing lug boss holes by means of semi-arc surfaces on the rotary-pressing lug bosses.

In some such examples, the rotary-pressing devices or mechanisms are pneumatic motors, hydraulic motors, or electric motors fixedly arranged in the rotary-pressing device holes. In some such examples, the rotary-pressing rotating shaft and the rotary-pressing drive body become an integral whole, and intercommunicated air inlet holes and exhaust holes are disposed on the rotary-pressing drive body, so that after entering the air inlet holes, the compressed air is discharged from the exhaust holes in the opposite direction of rotation, and pushes the rotary-pressing drive body and air pipes to rotate together by the recoil force generated outside.

In some embodiments, support shaft holes are disposed on the two connected end portions simultaneously, the support shafts are arranged in the support shaft holes in a penetrating manner, and the support shafts are fixedly connected to one of the connected end portions and rotatably connected to the other connected end portion; and locking shaft holes of support shafts penetrate through two ends of the support shaft, the locking shaft holes of support shafts including locking shaft holes containing non-regular circular cross-sectional segments in the connecting shaft end portion and partial segments of locking shaft holes containing non-regular circular cross-section segments in the movable end portion. The two connected end portions and the movable locking shafts are supported by means of the support shafts to avoid mutual stresses interfering with the rotation of the movable end portion. In some preferred examples, non-regular circular cross-sectional segments of the support shafts are embedded with and circumferentially fixed to non-circular cross-sectional segments of inner walls of the support shafts, and are axially and fixedly connected to limit pins of limit pin holes of connecting shaft end portion by penetrating through limit pins of support shafts. Although the limit pins can play a role of circumferential fixation, in some examples, contact parts between the limit pins and walls of support sleeve holes are deformed or fractured due to the stresses generated during the rotation.

In some embodiments, angle sensors for sensing a locking angular position between the two connected end portions are mounted on the drive devices.

In some examples, a tension sensor is arranged between the two connected end portions to detect tensile stresses of the two connected rotatable bodies during gripping of objects and other actions in the process of rotation. For example, rotary locking mechanisms for robotic hands or robots.

In some examples, reset torsion springs are arranged in the two connected end portions, the reset torsion spring is sleeved on the movable locking shaft or the support shaft, with one end being clamped to the movable end portion, and the other end being clamped to the connecting shaft end portion or other mountings axially fixed to the connecting shaft end portion; and the reset torsion spring allows the driving force of the drive device overcoming the torsion force thereof, so that the drive device can rotate normally.

In some examples, a prelocking spring is arranged between the two connected end portions, and non-regular circular cross-sectional segments on embedded parts between the movable locking shafts and the movable end portion has tapers for insertion fit. In two opposite side faces of the two connected end portions, a gap for cooperating in setting the prelocking spring is formed between two opposite side faces close to the head portion of the movable locking shaft. The prelocking spring is arranged in the gap such that the hole wall of the locking shaft hole of the movable end portion is always kept in a pressing state with the movable locking shaft. An axial pressure exerted on the movable locking shaft by the limit spring is greater than a pressure exerted on the movable locking shaft by the prelocking spring. In addition, as the number of times of use increases, even if the locking shaft hole is enlarged due to wear between the movable locking shaft and the corresponding wall of the locking shaft hole, the slightly tapered movable locking shafts and the wall of the locking shaft hole, under the pressure of the limit spring and prelocking spring, cause the movable locking shaft still to be tightly fitted and locked with the wall of the locking shaft hole in the locking state after it has been displaced in the locking direction. In some examples, the rotary drive device or mechanism is a unidirectional rotary drive or mechanism, which, when the two connected end portions are stopped after being rotated relatively to a set angular position under the action of a driving force, is reset relatively by reverse rotation under the action of the reset torsion spring. In some examples, a groove cooperated with the prelocking spring is disposed on a side face of the gap, with one end of the prelocking spring pressing against a bottom of the groove, and the other end pressing against a side face opposite to the groove or a bottom of the groove of the side face.

### Advantageous effects of the present disclosure

### Advantageous effects

1. The locking function of the rotary locking device or mechanism of the present disclosure is realized in the two connected end portions. The rotary locking device or mechanism has the characteristics of simplicity, aesthetics, safety and stability, long service life, easy to replace parts, etc., has a great economic value and value of use, and can be widely applied in some products which have special requirements on appearance and structure.
2. The rotary locking device or mechanism of the present disclosure realizes the function of locking and unlocking the two connected rotatable bodies at different locking angles by setting the shape of the non-regular circular cross-section of the movable locking shafts and the locking shaft holes. By radially arranging stop lug bosses on side walls of the movable locking shafts and disposing stop lug boss grooves cooperating with the motion of the stop lug bosses on the corresponding walls of the locking shaft holes for the locking angular positions need to be locked, the movable locking shafts and the movable end portion can smoothly bypass the unwanted locking angular positions in the process of relative rotation.
3. The degree of freedom is adjusted or set by changing the angular positions of the rotation axis of the two connected end portions.
4. When the two connected rotatable bodies cannot rotate relatively to a desired angle, for example, to realize the relative rotation of the two connected rotatable bodies to a relatively parallel position, an auxiliary rotatable body with a matched shape and length can be connected between the two connected rotatable bodies.

### Description of the Drawings

FIG. 1 is a schematic diagram of a three-dimensional structure of a rotary locking mechanism in a first example of the present disclosure.
FIG. 2 is a schematic diagram of a breakdown structure of FIG. 1 (except for an air pipe).
FIG. 3 is a main sectional view of FIG. 1.
FIG. 4 is a radial sectional view of a mid-section rotatable body in the first example.
FIG. 5 is a sectional view of an end-section rotatable body in the first example.
FIG. 6 is a schematic structural diagram of a support shaft in the first example.
FIG. 7 is a sectional view of a rotary-pressing drive body in the first example.
FIG. 8 is a schematic structural diagram of a rotary drive body in the first example.
FIG. 9 is a schematic diagram of a three-dimensional structure of a rotary locking mechanism in a second example of the present disclosure.
FIG. 10 is an explosive view of FIG. 9.
FIG. 11 is a schematic diagram of a breakdown structure of two connected end portions in the second example.
FIG. 12 is a cross-sectional view of the two connected end portions on a mid-section rotatable body in the second example.
FIG. 13 is a schematic diagram of a structure between a movable locking shaft with a pressurized lug boss and a drive motor in the second example.

### Detailed Description

### Examples of the present disclosure

### Embodiments of the present disclosure

The present disclosure is further described in detail by reference to the accompanying drawings and examples. It is to be understood that the specific examples described below are merely illustrative of the present disclosure and do not constitute a limitation on the present disclosure.

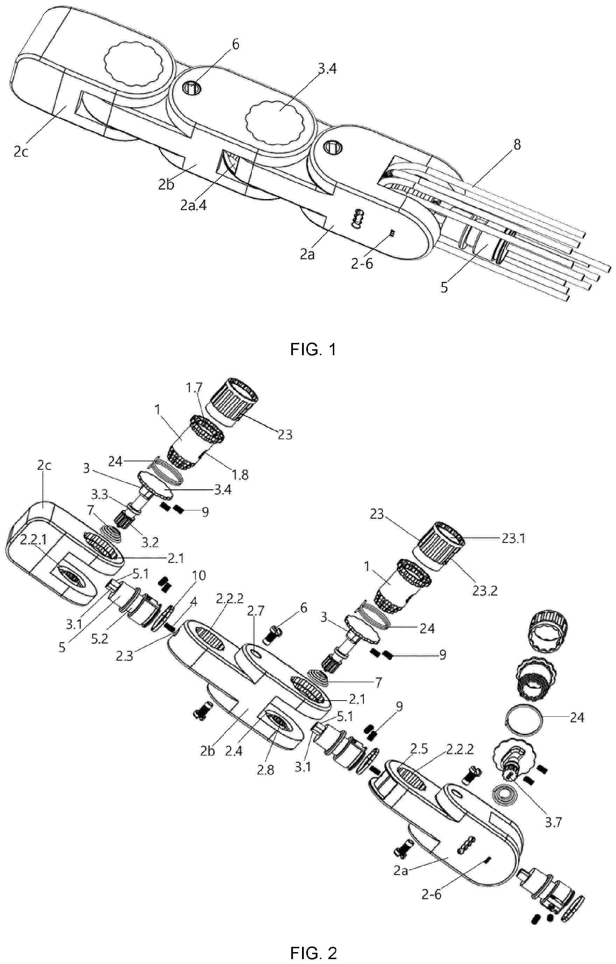

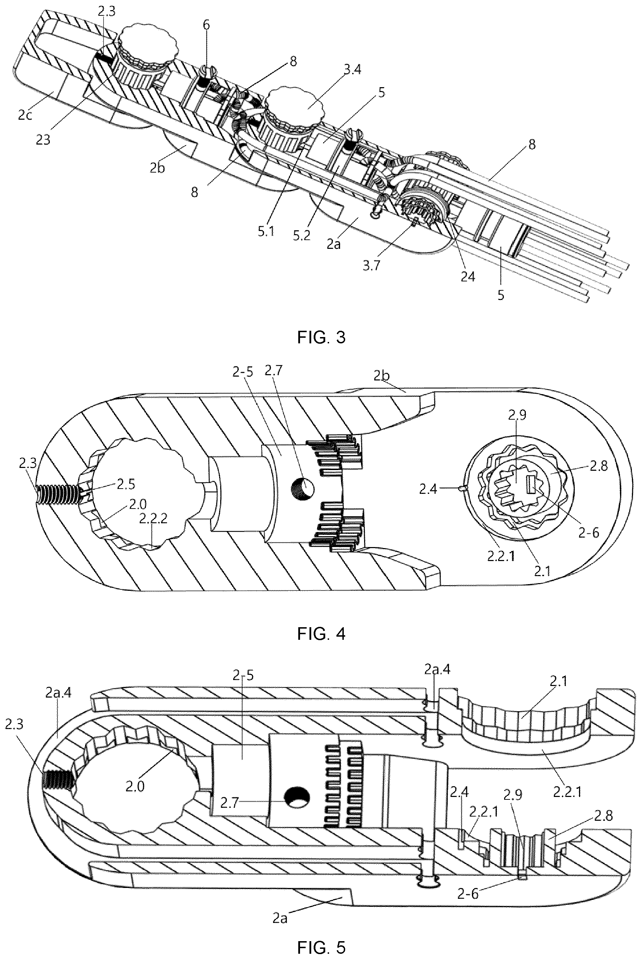

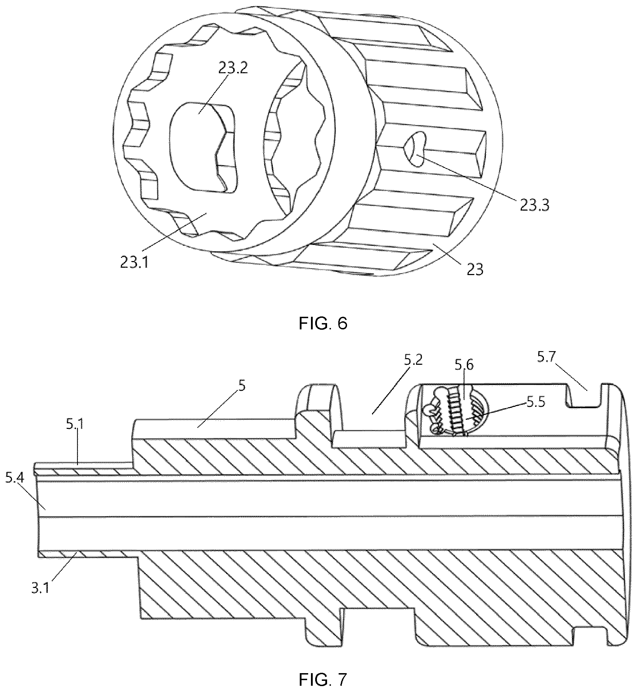

Example 1: referring to FIGS. 1-8, a rotary locking mechanism includes three rotatable bodies 2, three movable locking shafts 1, three support shafts 23, rotary drive bodies 3, rotary-pressing drive bodies 5, twelve air pipes 8, air pipe connectors 9, air pipe locking rings 10, reset torsion springs 24, limit springs 7, and locating pins 6.

The three rotatable bodies in this example are connected to each other in series, with intercommunicated support shaft holes of connecting shaft end portion 2.2.2, support shaft holes of movable end portion 2.2.1, and locking shaft holes of movable end portion 2.1 penetrating through two sides of each of two connected end portions at the same time. Support shafts 23 are arranged in the support shaft holes of connecting shaft end portion 2.2.2 and the support shaft holes of movable end portion 2.2.1 in a penetrating manner, with outer walls of partial segments of support shafts 23 arranged in the support shaft holes of movable end portion 2.2.1 in a penetrating manner and inner walls of the support shaft holes of movable end portion 2.2.1 being cylindrical walls of rotatable fit. Inner walls of the support shaft holes of connecting shaft end portion 2.2.2 and corresponding outer walls of partial segments of the support shafts 23 have axisymmetric cross-sections with twelve symmetric axes, so that the support shafts 23 are circumferentially fixed to connecting shaft end portions. Intercommunicated limit pin holes of connecting shaft end portion 2.3 and limit pin holes of support shafts 23.3 are radially disposed on the connecting shaft end portions and the support shafts 23 in a penetrating manner, and the support shafts 23 are axially fixed to the connecting shaft end portions by limit pins 4.

Toothed insertion posts 3.2 are arranged on axial end faces of the rotary drive bodies 3 in a locking direction of the movable locking shaft 1. Hook grooves 3.8 are disposed on end faces of the insertion posts 3.2, and two hooks 3.7 higher than the hook grooves 3.8 are arranged at bottoms of the hook grooves 3.8. Cylindrical lug bosses 2.8 slidably cooperated with drive device holes 1.7 are axially arranged on inner side walls of through grooves of the movable end portion in a locking direction of the movable locking shaft 1. Insertion post holes 2.9 cooperated with the insertion posts 3.2 in an insertion manner are disposed in centers of the cylindrical lug bosses 2.8, and hook lug boss holes 2-6 cooperated with the two hooks 3.7 are disposed at bottoms of the insertion post holes 2.9, and the two hooks 3.7 are hang in the hook lug boss holes 2-6. Locating flanges 3.3, in locking fit with non-circular cross-sectional segments in the locking shaft holes of movable end portion 2.1, i.e. in circumferential fixation with the movable end portions, are arranged on end faces of the rotary drive bodies 3 located at ends face-to-face/opposite to the insertion posts 3.2. Limit spring flanges 3.4 are arranged on the drive bodies 3, and limit springs 7 are arranged between the limit spring flanges 3.4 and steps in non-circular segments of the drive device holes 1.7, and the limit springs 7 have to allow a rotary-pressing force of rotary-pressing lug bosses 5.1 overcoming the pressure thereof and rotatably pressing against sides of inner walls of rotary-pressing lug boss holes in an unlocking direction until the movable locking shafts 1 move to unlocking positions.

Rotary-pressing device holes 2-5, which are cooperated with the rotary-pressing drive bodies 5 and intercommunicated with the locking shaft holes 2.1, are separately disposed in a mid-section rotatable body 2b and an end-section rotatable body 2c. Locating ring grooves 5.2 are disposed circumferentially on the rotary-pressing drive bodies 5. Locating pin holes 2.7 are disposed on portions of the rotatable bodies located at bottoms of the locating ring grooves 5.2. The rotary-pressing drive bodies 5 are rotatably and axially located in the rotary-pressing device holes 2-5 by means of locating pins 6. Semi-arc rotary-pressing lug bosses 5.1, end portions of which are of equal diameter to rotary-pressing rotating shafts 3.1, are radially arranged on axial cross-sections of end portions of the rotary-pressing rotating shafts 3.1. Rotary-pressing lug boss holes 5.3, which are communicated with the rotary-pressing device holes 2-5 and rotatably cooperated with the rotary-pressing lug boss holes 5.1, are disposed on side walls of the movable locking shafts 1 in a penetrating manner. Avoidance holes 23.2, which are communicated with the rotary-pressing lug boss holes 1.1 and without interfering the rotation of the rotary-pressing lug bosses 5.1, are disposed on side walls of the support shafts 23 in a penetrating manner, and the rotary-pressing lug bosses 5.1 are arranged inside the rotary-pressing lug boss holes in a penetrating manner.

Air pipe holes of rotary-pressing drive bodies 5.4 are disposed at two axial ends of each of the rotary-pressing drive bodies in a penetrating manner. Two intercommunicated inlet holes of rotary-pressing drive bodies 5.5 and exhaust holes of rotary-pressing drive bodies 5.6, which are in parallel to rotational tangent lines of rotary-pressing bodies, are disposed at ends of the rotary-pressing drive bodies 5 opposite to the rotary-pressing lug bosses 5.1. Air pipe holes of first-section rotatable body 2a.4 penetrate through two sides of a first-section rotatable body 2a in a direction of two ends of the rotary-pressing drive body. After passing through the air pipe holes of first-section rotatable body 2a.4, four air pipes 8 are connected to two inlet holes of rotary drive bodies 3.5 in a connecting shaft end portion of the mid-section rotatable body 2b and to two inlet holes of rotary-pressing drive bodies 5.5 in the rotary-pressing drive device holes of the mid-section rotatable body 2b via air pipe connectors 9. The four air pipes pass through drive device holes of the first-section rotatable body 2a, with two of the air pipes 8 being connected to inlet holes of rotary-pressing drive bodies 5.5 in the first-section rotatable body 2a, and the other two air pipes 8, after passing through the air pipe holes of rotary-pressing drive bodies 5.4, being connected to inlet holes of rotary drive bodies 3.5 in a connecting shaft end portion of the first-section rotatable body 2a via air pipe connectors 9. The two air pipes 8 pass through the air pipe holes of rotary-pressing drive bodies 5.4 outside the first-section rotatable body 2a, and are connected to the inlet holes of rotary drive bodies on the movable end portion of the first-section rotatable body 2a via air pipe connectors 9. Two air pipe connectors 9 are inserted into the air inlet holes of rotary-pressing drive bodies outside the first-section rotatable body. The rotary-pressing drive bodies outside the first-section rotatable body are connected to an external base or other mountings to form a rotary locking device or mechanism.

After entering the inlet holes 5.5 of the rotary-pressing drive bodies 5, the compressed air is discharged from the exhaust holes 5.6 along the opposite direction of the rotation to simultaneously rotate the rotary-pressing drive bodies 5 and the air pipes 8 under a recoil force generated outside. Locking ring grooves 5.7 are circumferentially disposed at openings of the inlet holes of the rotary-pressing drive bodies 5 to lock segments of the air pipes 8 located at the inlet holes of the rotary-pressing bodies 5 by means of air pipe locking rings 10. The movable locking shafts 1 move to locking positions or unlocking positions by the rotary-pressing lug bosses 5.1 rotatably pressing axial inner walls of rotary-pressing lug boss holes 1.8. In the same way, after entering the inlet holes of rotary drive bodies 3.5, the compressed air is discharged outside from exhaust holes of rotary drive bodies 3.5 communicated with the inlet holes of rotary drive bodies 3.5 along an opposite direction, to simultaneously rotate the drive bodies 3 and the air pipes 8 under a recoil force generated by the discharged compressed air. In this example, angle sensors for sensing an angle between the two connected rotatable bodies can be arranged on the drive bodies 3.

Holes are disposed on inner walls of partial segments of the support shaft holes 2.2 in the connecting shaft end portion and located on a locking direction of the movable locking shaft as second holes of reset torsion spring holes 2.0. Reset torsion springs 24 are arranged in the reset torsion spring holes 2.0, with one ends being clamped in torsion spring limit grooves of movable end portion 2.4 and the other ends being clamped in torsion spring limit grooves of connecting shaft end portion 2.5. The reset torsion spring 24 allows a driving force of the drive device to overcome a torsion thereof, so that the drive device can rotate normally.

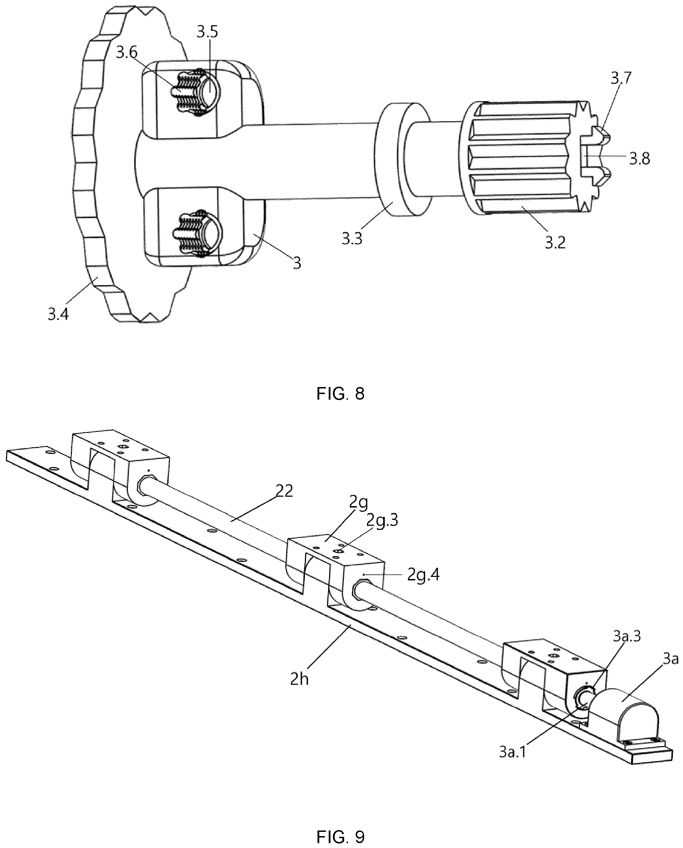

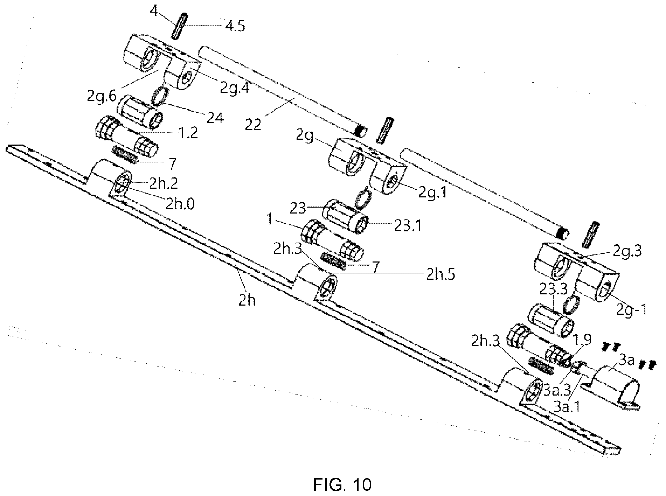

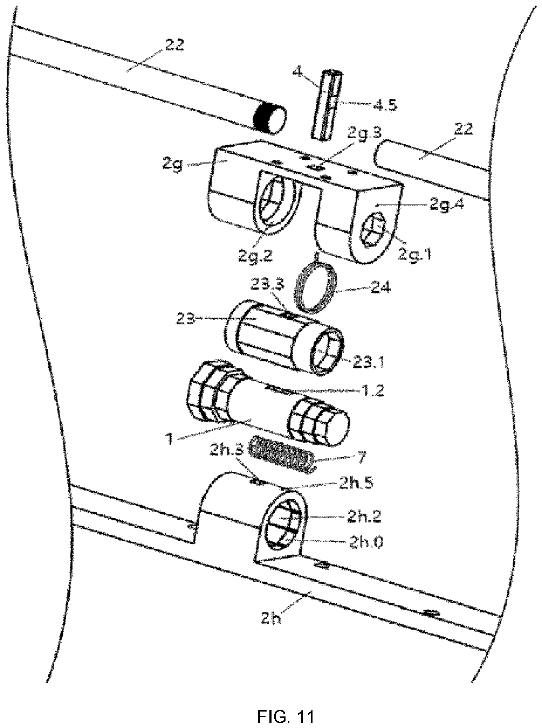

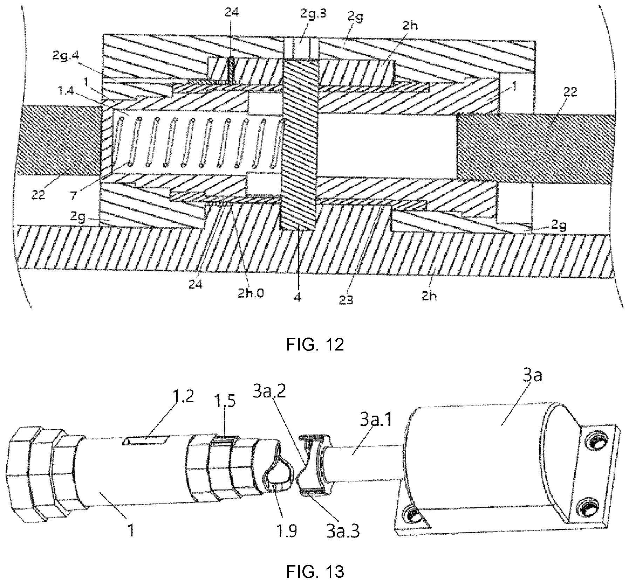

Example 2, as shown in FIGS. 9-13, a rotary locking mechanism includes a parallel rotatable body 2h containing three connecting shaft end portions, three rotatable bodies gh with each containing only one movable end portion, movable locking shafts 1, limit springs 7, support shafts 23, reset torsion springs 24, limit pins 4, connecting rods 22 and a drive motor 3a. Rotatable bodies 2g containing only movable end portions are separately connected to the three connecting shaft end portions of the parallel rotatable body 2h, with the movable locking shaft 1 in each of the connected end portions having the same locking direction and three rotation axes being in the same straight line. The movable locking shafts 1 form regular octagonal prisms with corresponding non-regular circular cross-sectional segments of walls of locking shaft holes as a whole. Between adjacent movable locking shafts 1, connecting rods 22 are screwed to tail portions of the movable locking shafts 1, and abut against head portions of the movable locking shafts 1.

Support shaft holes of connecting shaft end portions 2h.2, support shaft holes of movable end portions 2g.2, and locking shaft holes of movable end portions 2g.1, which are perpendicular and intercommunicated and passing by two sides of through groves, penetrate through the connecting shaft end portions and two sides of the movable end portion. The support shafts 23 are arranged in the support shaft holes of connecting shaft end portions 2h.2 and the support shaft holes of movable end portions 2g.2 in a penetrating manner, and are circumferentially fixed to the connecting shaft end portions and rotatably connected to the movable end portions. Inner walls of the support shaft holes of movable end portions 2g.2 disposed on two sides of the through grooves 2g.6 in a penetrating manner and outer walls of the corresponding segments of support shafts 23 are cylindrical walls. Support shaft locking shaft holes 23.1 including locking shaft holes in the connecting shaft end portions and locking shaft holes in partial segments of the movable end portions axially penetrate through two ends of each of the support shafts 23.

Limit pin holes 2h.3 of connecting shaft end portions, limit pin holes of support shafts 23.3 and limit pin holes of movable locking shafts 1.2, which vertically pass by mounting through-holes 2g.3 on bottom walls of the through grooves 2g.6, are disposed on the connecting shaft end portions and two radial sides of the movable locking shaft 1, and on two radial sides of the supporting shaft 23. The limit pins 4 pass through the mounting through-holes 2g.3 until entering bottom walls of the limit pin holes of connecting shaft end portions 2h.3, and the connecting shaft end portions are fixedly connected to the support shafts 23 via the limit pins 4. In a locking state, a distance from a side of the limit pin facing a locking direction of the movable locking shaft to a side wall of the limit pin hole of movable locking shafts 1.2 is greater than or equal to a movable effective distance of the movable locking shaft moving axially from an unlocking position to a locking position. Limit spring holes 1.4 extending in the locking direction of the movable locking shaft 1 are disposed on side walls of the limit pin holes of movable locking shafts 1.2. The limit spring 7 is arranged in the limit spring hole 1.4, with one end pressing against a bottom wall of the limit spring hole 1.4, and the other end pressing against the limit pin 4. The movable locking shaft 1 is axially and movably limited in the locking shaft hole by the limit spring 7 and the limit pin 4. Side walls of the limit pins 4 are disposed with diagonal grooves 4.5 abutting against the limit springs 7, so that the limit pins 4 keep abutting against bottom walls of the limit pin holes of connecting shaft end portions 2h.3 by the diagonal pressure from the limit springs 7, thus preventing the limit pins 4 from entering the mounting through-holes 2g.3 to interfere with the movable end portions.

Second holes as reset torsion spring holes 2h.0 are disposed on inner walls of the support shaft holes of connecting shaft end portions 2h.2 near one end of the head portion of the movable locking shaft. Torsion spring limit grooves of movable end portions 2g.4 for insertion of one end of the reset torsion spring 24 are disposed axially on side walls of the through grooves 2g.6. Torsion spring limit holes 2h.5 for insertion of the other end of the reset torsion spring 24 are disposed on inner walls of the reset torsion spring holes 2h.0. During the mounting of the reset torsion spring 24, one end thereof is first inserted into the torsion spring limit hole of the connecting shaft end portions 2h.5, and then the reset torsion spring 24 is mounted into the reset torsion spring hole 2h.0; and the other end enters the support shaft hole of movable end portions by means of deformation when the movable end portion is inserted into the connecting shaft end portion, and then is clamped in the torsion spring limit groove of movable end portions 2g.4

A bidirectional rotary drive motor 3a coaxial with the three connected end portions is arranged at one end of the parallel rotatable body 2h in the locking direction of the movable locking shaft. A hollow post corresponding to the head portion of the movable locking shaft 1 is axially arranged on an end face of a drive shaft 3a of the motor 3a. Two symmetrical rotary-pressing lug bosses 3a.2 are arranged circumferentially at the hollow post, and two symmetrical driving lug bosses 3a.3 are arranged radially at the hollow post. An intersection line of two circumferential sides of the two driving lug bosses 3a.3 is collinear with a rotation axis, with an angle of 45 degrees between the two sides.

The movable end portions are disposed with drive holes intercommunicated with the locking shaft holes, and two symmetrical driven lug bosses 2g-1, which are cooperated with the driving lug bosses 3a.3, are arranged at two ends of a diameter of an extension segment of a wall of the locking shaft hole in the locking direction of the movable locking shaft 1. An intersection line of planes where two circumferential sides of the two driven bosses 2g-1 are located are collinear with a rotation axis, with an angle between the two sides being 45 degrees. Hollow posts are arranged on end faces of the head portions of the movable locking shafts, and two symmetrical pressurized grooves 1.9 matched with the rotary-pressing lug bosses 3a.2 are disposed on end faces of the hollow posts. When the drive shaft 3a.1 rotates by 90 degrees from an initial position, rotary-pressing slopes on two sides of the rotary-pressing lug boss 3a2 rotatably press pressurized slopes on two sides of the pressurized groove 1.9 to an end face of the rotary-pressing lug boss to be abutted against upper parts of the pressurized slopes, the movable locking shaft moves to an unlocking position, and side faces of the two driving lug bosses 3a.3 abut against two side faces of the driven lug bosses 2g-1. When the driving lug boss 3a.3 drives the driven lug boss 2g-1 to continuously rotate by 90 degrees, a stop lug boss 1.5 moves into a stop lug boss groove, the two rotary-pressing lug bosses 3a.2 slide into the pressurized grooves 1.9 at the same time, and the two connected end portions rotate to locking angular positions, that is, the movable locking shaft moves to the locking position under the pressure of the limit spring. When the driving lug boss 3a.3 rotates by 90 degrees in reverse, a rotary-pressing slope on the other side of the rotary-pressing lug boss 3a.2 rotatably presses a pressurized slope on the other side of the pressurized groove to an end face of the rotary-pressing lug boss 3a.2 to be abutted against an upper part of the pressurized slope of the pressurized groove 1.9; and at this time, the movable locking shaft 1 moves to an unlocking position, and the driving lug boss 3a.3 abuts against the driven boss 2g-1. When the driving lug boss drives the driven lug boss 2g-1 to continuously rotate by 90 degrees in reverse, the two connected end portions rotate to the initial position. After the three rotatable bodies with each containing only the movable end portion are simultaneously connected to an integral mounting, the driving lug boss, in the process of rotating, simultaneously drives the three rotatable bodies with each containing the movable end portion to rotate.

In the case of power failure, when the connecting rod 22 close to the locking direction of the movable locking shaft 1 is manually pushed, each movable locking shaft 1 moves from the locking position to the unlocking position driven by the connecting rod 22. After the external force is withdrawn, the connecting rod 22 moves with the movable locking shaft 1 to the initial position driven by the limit spring 7.

The above examples are only exemplary examples of the present disclosure, are not intended to limit the present disclosure, and are capable of realizing the present disclosure in other specific forms without departing from the spirit or essential features of the present disclosure. Therefore, no matter from which point of view, the examples are to be regarded as exemplary, rather than limited. The scope of the present disclosure is defined by the attached claims rather than the above illustration. It is therefore intended that all variations falling within the meaning and scope of equivalent elements of the claims be included in the present disclosure.

### Industrial practicality

The rotary locking device or mechanism of the present disclosure can be applied in different fields, such as industry, transportation, engineering and construction, medical, aerospace, and artificial intelligence. The rotary locking device or mechanism of the present disclosure features a compact structure, a high locking strength and fewer parts used, and can be widely applied in products with special requirements on shape, size and performance, especially those with high requirements on operating environment, such as robotic arms, robotic grippers, medical instruments or robots, industrial robots, humanoid robot joints, and small-sized robot worms.

## Claims

1. A rotary locking device or mechanism, comprising at least two rotatable bodies, movable locking shafts, and drive devices or mechanisms, wherein the drive devices or mechanisms comprise rotary drive devices or mechanisms, and axial drive devices or mechanisms; intercommunicated locking shaft holes containing non-regular circular cross-sectional segments are disposed at the rotatable bodies and two connected end portions therebetween in a penetrating manner, and movable locking shafts containing non-regular circular cross-sectional segments are disposed in the locking shaft holes in a penetrating manner; the two connected end portions are locked when the movable locking shafts move axially under the action of the axial drive devices or mechanisms to locking positions where the movable locking shafts are embedded and locked simultaneously with walls of the locking shaft holes in the two connected end portions; and the two connected end portions are unlocked when the movable locking shafts axially move under the action of the axial drive devices or mechanisms to unlocking positions where at least one of the connected end portions may be rotated relatively to the movable locking shafts within a specified angular range by means of the rotary drive devices or mechanisms.

2. The rotary locking device or mechanism according to claim 1, wherein the two connected end portions separately are a connecting shaft end portion and a movable end portion disposed with a through groove; the locking shaft holes are vertically disposed on a side face of the through groove in a penetrating manner; the two connected end portions are connected by insertion via the movable locking shafts; and the connecting shaft end portion is connected to the movable locking shafts as a whole in a manner of non-relative rotation.

3. The rotary locking device or mechanism according to claim 1 or 2, wherein axial cross-sections of the movable locking shafts and the locking shaft holes are in a step shape as a whole; a non-regular circular cross-section of a stepped segment of each of the movable locking shafts is an axisymmetric figure having three or more symmetric axes; and in two adjacent stepped segments, a maximum non-regular circular cross-sectional area of a stepped segment close to a locking direction of the movable locking shaft is less than or equal to a minimum non-regular circular cross-sectional area of the other stepped segment.

4. The rotary locking device or mechanism according to claim 1 or 2, wherein the axial drive devices or mechanisms comprise elastic members, the elastic members are arranged directly or indirectly between the movable locking shaft and the rotatable body and keeps exerting pressure on the movable locking shaft in a locking direction.

5. The rotary locking device or mechanism according to claim 1 or 2, wherein the drive devices or mechanisms comprise rotary drive bodies or rotary drive shafts, the rotary drive bodies or the rotary drive shafts being rotatably connected to one of the two connected end portions.

6. The rotary locking device or mechanism according to claim 1 or 2, further comprising support shafts, wherein support shaft holes are disposed on the two connected end portions simultaneously in a penetrating manner, the support shafts are arranged inside the support shaft holes in a penetrating manner, and the support shafts are fixedly connected to one of the connected end portions and rotatably connected to the other connected end portion; and locking shaft holes of support shafts penetrate through two ends of each of the support shafts, the locking shaft holes of support shafts comprising locking shaft holes containing non-regular circular cross-sectional segments in the connecting shaft end portion and partial segments of locking shaft holes containing non-regular circular cross-sectional segments in the movable end portion.

7. The rotary locking device or mechanism according to claim 1 or 2, further comprising sensors, the sensors being configured to sense a relationship between the two connected rotatable bodies.
